# EUROPEAN PATENT SPECIFICATION

(11) **EP 0 581 381 B1**
(45) Date of publication and mention of the grant of the patent: **12.03.1997**
(21) Application number: 93202183.5
(22) Date of filing: 23.07.1993
(51) Int. Cl.: B62D 49/08, B62D 37/04

(54) **Shiftable tractor ballast**
Bewegliches Gegengewicht für einen Traktor
Ballast ajustable pour un tracteur

(30) Priority: 27.07.1992 US 919325; 27.07.1992 US 919326
(43) Date of publication of application: 02.02.1994
(73) Proprietor: NEW HOLLAND U.K. LIMITED, Basildon, Essex SS14 3AD (GB)
(72) Inventor: Hurlburt, Joseph C., Lancaster, PA 17603 (US); Jennings, Richard E., Manheim, PA 17545 (US)
(74) Representative: Vandenbroucke, Alberic

(56) References cited:
- EP-A- 0 071 796
- WO-A-89/07545
- DE-A- 1 941 316
- DE-A- 2 648 441
- DE-B- 1 165 427
- GB-A- L 547

## Description

The present invention relates generally to a steering mechanism for an agricultural tractor in which the front axle is laterally shiftable in response to a steering movement of the steerable wheels and, more particularly, to a ballast assembly for such laterally shiftable front axle steering mechanisms to maintain proper weight distribution on the steerable wheels as the front axle shifts laterally.

In the following description right hand and left hand references are determined by standing at the rear of the tractor facing in a direction of forward travel. Also, in the following description, it is to be understood that such terms as "forward", "rearward", "left", "upward", etc., are words of convenience and are not to be construed as limiting terms.

Tractors, whether used in an agricultural setting or in an industrial setting, typically include a fixed axle through which primary driving power is transferred through fixed wheels rotatably mounted on opposing ends of the fixed axle, and a steering axle having pivotally mounted steerable ground engaging wheels rotatably mounted on the opposing ends thereof to support the chassis of the tractor above the ground. Commonly, supplemental driving power is often provided to the steerable ground engaging wheels as well. A steering mechanism remotely controllable by the operator from the operator's compartment selectively controls the pivotal movement of the steerable wheels relative to the steering axle.

One such steering mechanism incorporates a transversely disposed, horizontally extending hydraulic cylinder supported by the steering axle and connected to the opposing steerable wheels. This hydraulic cylinder affects pivotal movement of the steerable wheels about their respective pivotal connections to the steering axle by manipulating the pressures in the hydraulic cylinder to effect a transverse extension or retraction of the cylinder rod, causing a turning of the wheels.

Due to physical limitations relating to the range of movement of the steering mechanism and to the eventual interference between the steerable wheels and the steering axle or chassis frame, the amount of pivotal movement of the steerable wheels relative to the steering axle is limited to a given turning angle. This maximum turning angle defines the minimum turning radius of the tractor for a given wheel base length and tread spacing. The selection of the length of the wheel base, i.e., the distance between the fixed axle and the steering axle, is a compromise between the need to minimize the turning radius and, therefore, minimize the wheel base length, and to maximize ride considerations which require longer wheel base lengths.

These conflicting wheel base requirements can be better resolved by a so-called compound steering mechanism incorporating a laterally shiftable front axle that is movable in response to a corresponding steering movement of the steerable wheels, which will decrease the turning radius of the tractor for any given wheel base length.

Traditionally, the front of the tractor is provided with added ballast or weights to improve weight distribution for the tractor during its operation and, thereby, increase traction for the front steerable wheels. Such weights are normally mounted in a fixed position to the forward part of the tractor chassis; however, for tractors in which the front axle would shift laterally relative to the chassis, such chassis mounted weights would become unevenly distributed to the steerable wheels since one steerable wheel moves closer to the weights than the other steerable wheel.

In JP-A-3-243.481, a traditional steering mechanism is shown in which a counter weight is movably supported by the chassis. Due to the large transverse dimensions of the counter weight, tire clearance during straight forward travel is kept at a minimal value. In order to avoid interference between the steerable wheels and the counter weight upon pivoting said wheels in the one or other direction, the counter weight is shifted in the same direction as said wheels i.e. towards the side of the chassis opposite to the outboard wheel. Although tire clearance is ensured with such an arrangement, it readily will be appreciated that the uniform weight distribution of the counterweight on the steerable wheels is largely disturbed.

It is therefore the objective of the present invention to overcome the disadvantages of the prior art arrangements by providing a ballast assembly on a tractor equipped with a compound steering mechanism in which a uniform weight distribution on the steerable wheels is maintained irrespective of the position of said wheels.

According to the present invention, a tractor is provided comprising :
- a chassis;
- a transverse rear axle connected to the chassis and carrying a pair of laterally spaced ground engaging wheels;
- a transverse front axle connected to the chassis and having pivotally mounted thereon a pair of laterally spaced steerable wheels; said front axle being positioned underneath a front portion of said chassis and being pivotally connected to said chassis for lateral movement relative thereto;
- steering means operably connected to the steerable wheels to control the pivotal movement of said steerable wheels relative to said front axle; and
- control means operably interconnecting said steerable wheels and said chassis to effect pivotal movement of said front axle relative to said chassis in response to a corresponding pivotal movement of said steerable wheels.

The tractor is characterized in that :
- ballast means are associated with a forward portion of the tractor to add weight to the steerable wheels; said ballast means being centrally positioned between said steerable wheels; and
- the ballast means moves laterally with the front axle to maintain a generally central position between said steerable wheels as said front axle moves relative to said chassis.

In one arrangement, the ballast means are mounted on an arcuate rack which is detachably affixed to the centre of the front steerable axle, whereby said ballast means will shift with the movement of the axle relative to the chassis of the tractor and thus will be maintained at a central position between the front steerable wheels. Hence, an equal distribution of weight on the front steerable wheels is ensured whenever the front axle is shifted laterally relative to the chassis.

In an alternative arrangement, the ballast means is mounted on an arcuate track affixed to the forward portion of the tractor chassis by means of rollers in order to permit a lateral shifting of the ballast means relative to the chassis in response to a lateral shifting of the steerable axle relative to said chassis.

A tractor in accordance with the present invention will now be described in greater detail, by way of example, with reference to the accompanying drawings, in which :
Figure 1 is a top plan view of a front axle assembly for an agricultural tractor incorporating the principles of the instant invention, the front portion of the tractor chassis, overlying the front axle assembly, being shown in phantom;
Figure 2 is a cross-sectional view of the front axle assembly taken along lines 2-2 of Figure 1, the front portion of the tractor chassis being shown in phantom relative to the front axle assembly;
Figure 3 is a cross-sectional view of the tractor front axle assembly taken along lines 3-3 of Figure 1 to depict generally a front elevational view of the tractor assembly immediately rearwardly of the weights;
Figure 4 is an enlarged top plan view of the tractor ballast assembly removed from the front axle of the tractor;
Figure 5 is a side elevational view of a single suitcase weight forming a part of the tractor ballast assembly;
Figure 6 is a top plan view of the suitcase weight shown in Figure 5;
Figure 7 is a cross-sectional view taken along lines 7-7 of Figure 5 through the central portion of the suitcase weight;
Figure 8 is an enlarged detail view of the tapped fastener member cooperable with a threaded bolt to clamp the front tractor weights together; and
Figure 9 is a view similar to the cross-sectional view of Figure 2, except showing an alternative embodiment of the mounting and movement of the front tractor weights.

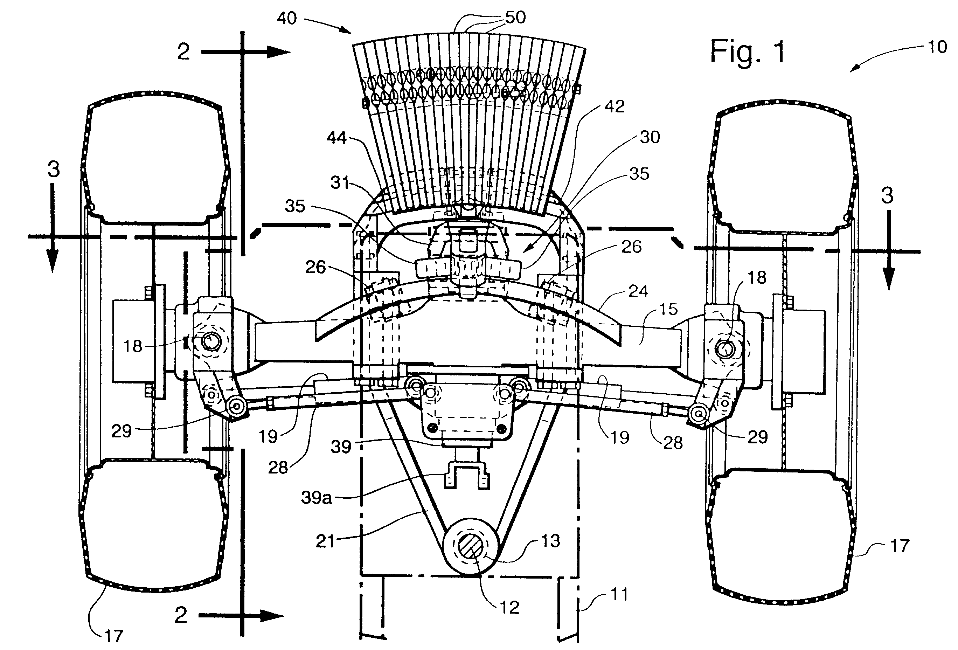

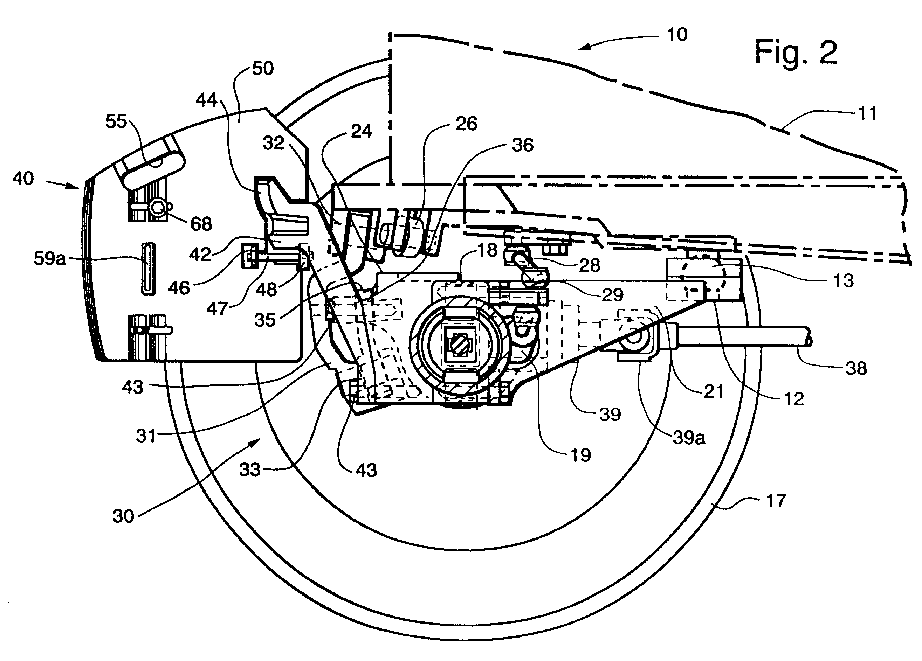

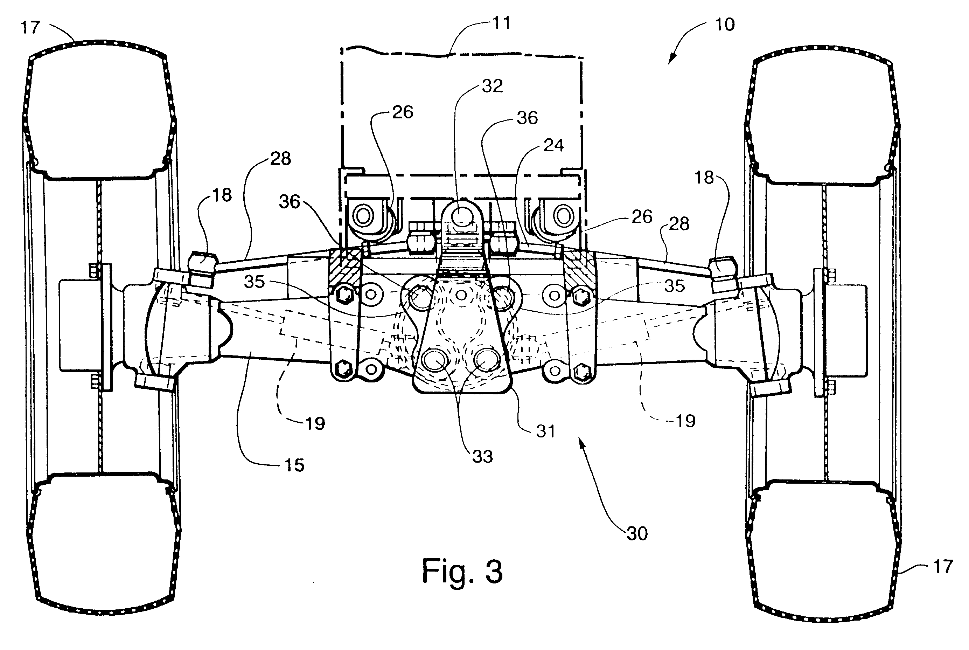

Referring now to Figures 1 to 3, a laterally shiftable front axle assembly for an agricultural tractor or other vehicle, pivotally connected to the vehicle chassis to provide a decreased turning radius for a given wheel base, can best be seen. The front axle assembly 10 is pivotally connected to the tractor chassis 11 for pivotal movement about a generally vertical axis 12, thereby allowing the front axle assembly 10 to rotate about the pivot axis 12 and shift the front axle assembly 10 laterally relative to the tractor chassis 11. The pivot axis 12 includes a ball joint 13 to permit some oscillatory movement of the front axle 15 relative to the chassis 11. The details of a laterally shiftable front axle assembly to provide better turning capabilities is described in detail in US-A-5.046.577, the description of which is incorporated herein by reference.

The front axle assembly 10 includes a transversely extending axle member 15 having pivotally mounted on the respective laterally opposing ends thereof a pair of steerable wheels 17 pivotable about respective nearly vertical axes 18 to effect a steering of the wheels 17 relative to the axle member 15. A pair of hydraulic cylinders 19 interconnect the axle member 15 and the steerable wheels 17 to control the pivotable movement of the wheels 17 relative to the axle member, and thereby, effect steering.

The front axle member 15 carries a rearwardly extending subframe member 21 which carries the vertical pivot 12 and ball joint 13 connected to the tractor chassis 11 rearwardly of the front axle member 15 yet positioned laterally between the front steerable wheels 17. A front yoke assembly 30 suspends the laterally shiftable front axle member 15 from the forward end of the tractor chassis 11 to permit a pivotal movement of the front axle assembly 10 relative to the tractor chassis 11 about the vertical axis 12. To facilitate relative movement between the front axle assembly 10 and the tractor chassis 11 when the axle is fully oscillated, the front axle member 15 is also provided with an arcuate track 24 having a centre of curvature coincident with the pivot axis 12. The chassis 11 carries a pair of laterally spaced rollers 26 that are engageable with the arcuate track 24 when the front axle member 15 oscillates generally about a horizontal axis in response to changing ground contours and undulations so that the rollers 26 provide a limit to the vertical movement of the front axle member 15 relative to the tractor chassis 11 due to an engagement thereof with the arcuate track 24.

A pair of tie rods 28 interconnecting the chassis 11 and the steerable wheels 17, transmit steerable movement of the wheels 17 relative to the front axle member 15 so as to effect a lateral shifting movement of the chassis 11 relative to the front axle 15. Although the front axle 15 is pivotally connected to the chassis 11, the front axle 15 is engaged with the ground through the wheels 17 and the actual pivotal movement results in a lateral shifting of the chassis 11. Looking at the front axle 15 from the reference frame of the chassis 11, the appearance is that the axle 15 shifts relative thereto and any reference hereinafter describing the pivotal movement of the front axle member 15 relative to the chassis is so described.

Because of the fixed length of the tie rods 28 interconnecting the chassis 11 and the wheels 17 at a connection point 29 spaced rearwardly from the respective pivot axis or king pin 18 for the corresponding steerable wheel 17, a pivotable movement of the wheel 17 about the corresponding pivot axis 18 will result in a corresponding shifting of the front axle 15 relative to the centre (not shown) of a tractor chassis 11, along which the vertical pivot axis 12 is positioned.

The front yoke assembly 30 has a contoured front strap member 31 pivotally connected at a first pivot 32 to the chassis 11. The front strap member 31 also carries a pair of lower pivots 33 for pivotally supporting a corresponding pair of dog bone-shaped links 35 which, in turn, are pivotally connected to the front axle member 15 by respective pivots 36. Each of the pivots 32, 33, 36 associated with the front yoke assembly 30 have a corresponding pivot axis aligned with the ball joint 13 forming a part of the pivot axis 12 between the front axle assembly 10 and the tractor chassis 11. Accordingly, the pivot axis for each of the five pivots 32, 33, 36 have a nonparallel relationship intersecting a common point at the ball joint 13. As a result, the pivotal movement of the front axle assembly 10 relative to the tractor chassis 11, resulting in a lateral shifting of the front axle member 15, is accomplished through a four-bar linkage which has substantially no vertical component associated with the movement thereof.

As depicted in Figures 1 to 3, the front axle assembly 10 may be powered in a conventional manner from the transmission (not shown) carried by the tractor chassis 11 through the front wheel drive shaft 38 connected to a conventional front wheel drive mechanism 39 to operatively power the rotation of the steerable wheels 15 to facilitate movement of the tractor chassis 11 over the ground. One skilled in the art will readily realize that the provision of a front wheel drive mechanism 39 is optional and independent of the operation of the compound steering mechanism permitting a lateral shifting of the tractor chassis 11 relative to the front axle member 15. The continuous driving of the front wheels 17 during steering operation involving a lateral shifting of the tractor chassis 11 relative to the front axle member 15 can be accommodated by the universal joint 39a interconnecting the front wheel drive mechanism 39 and the drive shaft 38.

In accordance with the principles of the instant invention, it can be seen in Figures 1 to 4 that a tractor ballast assembly 40 is carried by the front axle assembly 10 intermediate of the steerable wheels 17 at a position centrally therebetween. A carrier 42 is detachably connected by fasteners 43 to the front axle member 15 to extend forwardly thereof and forwardly of the tractor chassis 11, as well. The carrier 42 is provided with an arcuate mounting ring 44 upon which individual suitcase weights 50 are supported. Since the carrier 42 moves with the front axle member 15 relative to the chassis 11, the position of the ballast assembly 40 relative to the laterally spaced front wheels 17 remains relatively fixed, thereby maintaining a substantially constant weight distribution relative to the front wheels 17. Furthermore, since the ballast assembly 40 moves with the axle member 15, the steering clearance between the pivotally movable wheels 17 and the ballast assembly 40 does not change as the front axle 15 shifts laterally and/or oscillates vertically. As a result, the operator may mount additional weight units 50 to increase the amount of ballast on the front axle 15 without decreasing the tire clearance below that which is acceptable for traditional tractors.

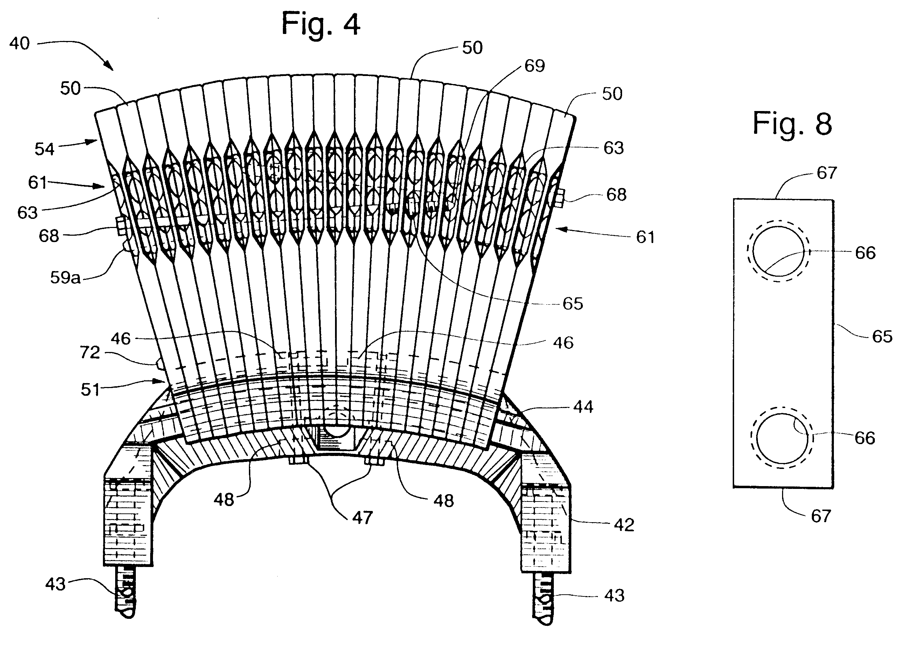

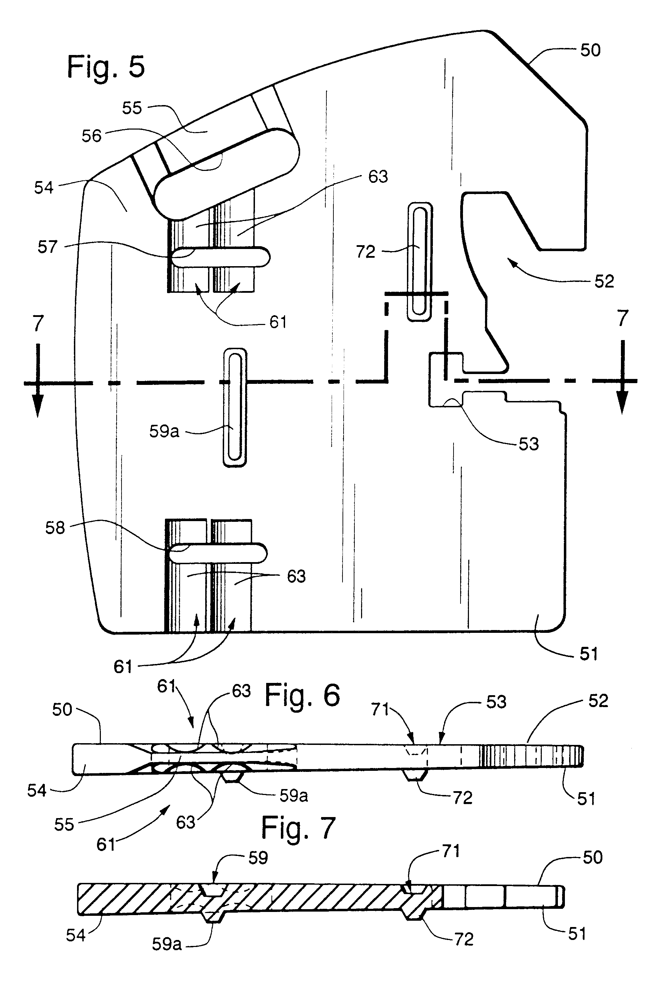

The individual suitcase weights 50 are best seen in Figures 5 to 7. Each weight 50 has a rearward end 51 having a specially contoured opening 52 therein to correspond to the carrier 42 and mounting ring 44 to permit the weight 50 to be properly supported thereon. Each weight 50 is also provided with a forward portion 54 associated with a fastener mechanism to connect the individual weights together and form a unitary ballast package mounted on the carrier 42. As best seen in Figures 4, 6 and 7, the forward portion 54 of each weight 50 is thicker in cross section than the rearward portion 51 which, when mounted on the arcuate mounting ring 44, presents a laterally curved ballast assembly 40, best seen in Figure 4. Accordingly, the forward portion 54 of each weight 50 has a greater mass than the thinner rearward portion 51 and, therefore, the centre of gravity of each weight 50 is forwardly of the physical centre of the weights.

Each individual weight 50 has a handle portion 55, including a first opening 56 extending therethrough, to provide a handle by which the weight 50 can be grasped and carried from place to place. Each weight 50 is also provided with a transverse upper fastener opening 57 and a transverse lower fastener opening 58, both of which are in the form of longitudinally extending slots. Each weight 50 is further provided with a detent 59 in one vertical face and a corresponding projection 59a on the opposing vertical face to provide a means for interlocking adjacent weights through the interengagement of the projection 59a on one weight into the corresponding detent 59 on the adjacent weight 50, when assembled into the ballast assembly 40. The contoured opening 52 in the rearward portion 51 of each weight 50 is provided with a rearward fastener opening 53 extending transversely through the weight to facilitate the mounting of an assembled plurality of weights 50 on the carrier 42 as will be described in greater detail below.

The weights 50 are also provided with a pair of adjacent vertically extending flutes 61 associated with each of the upper and lower fastener openings 57, 58 and incorporated into both sides of the weight 50. Each of the flutes 61 extend to the vertically nearest surface of the weight 50 to permit access to the interior of the ballast assembly 40, for purposes to be described in greater detail below. In the instances of the flutes 61 associated with the upper fastener opening 57, the handle portion 55 defines a recessed portion of the weight 50, as best depicted in Figure 6, such that the flutes 61 need only extend to the handle opening 56 to provide sufficient access to the upper fastener opening 57. Each flute 61 has a vertically oriented arcuate surface 63.

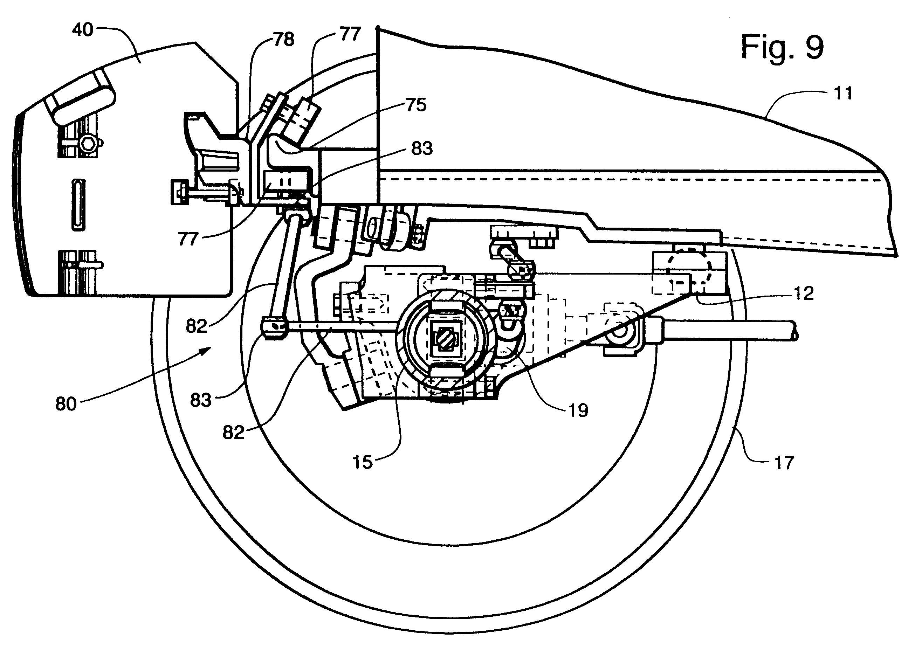

Referring now to the detail view of Figure 8, a fastener strip 65 used to clamp the weights 50 together can best be seen. The fastener strip 65 is an elongated metal strip having a pair of tapped holes 66 formed in the opposing ends 67 of the strip 65. The holes 66 are positioned relative to the respective ends 67 of the strip 65 such that the strip 65 can be inserted into the flutes 61 to position one of the holes 66 in substantial alignment with the corresponding fastener opening 57, 58. Each fastener strip 65 is provided with two holes 66 to provide greater flexibility in use of the strip 65, such that no particular care needs to be taken to insert the strip 65 into the flute 61 in the proper orientation, unless one of the holes 66 has been damaged.

To clamp the weights 50 together, preferably after the weights 50 have been supported on the carrier 42, a long threaded fastener 68 is inserted generally horizontally through the upper fastener opening 57 from one side of the ballast assembly 40 and threaded into the corresponding tapped hole 66 in a fastener strip 65 inserted downwardly through one of the flutes. The threaded fastener 68 is provided with a conical tip 69 to assist in seeking the hole 66 in the strip 65. The fastener 68 is then threaded into the tapped hole 66 until tightened. Because of the arcuate shape of the ballast assembly 40, the fastener 68 may not be able to extend entirely through the ballast assembly 40, depending on the overall size of the assembled weight package, requiring the insertion of the fastener strip 65 in a flute corresponding to an intermediate weight 50 in the ballast assembly 40. One skilled in the art will realize that the fastener must clamp together more than half of the weights 50.

To complete the assembly of the ballast assembly 40, a second fastener 68 must be inserted through the upper fastener opening 57 from the opposite side of the ballast assembly 40 and engaged with a corresponding fastener strip 65, the two fasteners overlapping several weights 50 at the centre of the ballast assembly 40. Similarly, a pair of fasteners 68 are inserted through the lower fastener opening 58 from opposing sides of the ballast assembly 40 to engage fastener strips 65 inserted upwardly into appropriate flutes 61. The utilization of four such fasteners 68 clamps the weights 50 together to form a unitary package.

The provision of an arcuate surface 63 for each flute 61 allows the fastener strip 65 and an appropriate washer associated with the head of the threaded fastener 68 to seek an equilibrium position in proper alignment with the fastener 68. The specific orientation of the fastener strip 65 relative to the arcuate surface 63 of the corresponding flute 61 will necessarily vary depending on the number of weights 50 clamped by the corresponding fastener 68. A full tightening of the fastener 68 may result in a coining of the fastener strip 65 and any washer used with the fastener 68 to match the shape of the arcuate surface 63.

Each weight 50 is also provided with a clamp opening 53, which may form a part of the contoured opening 52, extending generally horizontally through the weight 50. As with the upper and lower fastener openings 57, 58, the clamp opening 53 forms an arcuate passageway through the assembled ballast assembly 40. A clamping strip 46 laterally inserted horizontally through the passageway defined by the adjacent clamp openings 53 will position a tapped hole for engagement with a clamping bolt 47 positioned below the carrier 42. A clamping block 48 associated with the clamping bolt 47 can be utilized to better engage the carrier 42. Preferably, at least two clamping bolts 47 will be utilized to firmly clamp the assembled weights 50 to the carrier 42. Optionally, the clamping strip 46 can be a single arcuate strip having a pair of tapped holes therein for engagement with a pair of clamping bolts 47 to provide some cooperative relationship therebetween.

One skilled in the art will readily realize that a ballast assembly constructed of such individual weights clamped together will result in an arcuate-shaped ballast assembly with the larger forward portions being spaced away from the front axle. As a result the centre of gravity of the ballast assembly will be spaced more forwardly than with conventional ballast assemblies to give a greater impact of the weights due to a longer moment arm between the centre of gravity and the front axle. Accordingly, such a ballast assembly will provide a greater ballasting effect for each pound of weight. The arcuate-shaped ballast assembly also improves tire clearance because of the narrower width of the ballast assembly being adjacent the tractor where the tires would normally interfere with the ballast package.

It has been found that a better shipping of a group of individual weights can be accomplished by alternating weight orientation and binding the weights 50 together. As a result, the stacked individual weights 50 will not form an arcuate shape, but rather a linear one. As shown in Figures 5 to 7, each weight 50 can be provided with an optional second detent 71 and corresponding projection 72 formed in the rearward portion 51 forwardly of the contoured opening 52. As with the first detent 59 and corresponding projection 59a, the interengagement of a projection 72 with an adjacent detent 71 helps to stabilize the ballast assembly 40. By forming the second detent 71 and corresponding projection 72 in the body of the weight 50 at a position relative to the top and rear of the weight 50 to correspond to the position of the first detent 59 and first projection 59a relative to the bottom and front of the weight 50, the weights 50 stacked for shipment will have the first projection 59a received by the second detent 71 and, conversely, the second projection 72 received by the first detent 59, thereby making the most compact package possible for shipment. Furthermore, the vertical and horizontal staggering of the two projections 59a, 72 provides a better interlocking relationship between adjacent weights 50.

One skilled in the art will readily realize that the mounting of the weights 50 directly to the laterally shiftable axle 15 will enable the ballast 40 to be maintained centrally between the front wheels 17 of the tractor as it makes turns, effecting a lateral shifting of the tractor chassis 11 relative to the front axle 15. One skilled in the art will also realize that this invention is not limited in use to agricultural tractors, but is applicable to any vehicle which can incorporate a laterally shiftable front axle and requires a detachable front ballast. The assembled weights 50 form a ballast assembly 40 having an aesthetically pleasing arcuate shape visually indicative of the lateral shifting of the axle 15 and attached weights 50. The physical structure of each weight 50 lends to the ease of assembling the weights 50 and of mounting the assembled weights 50 on the carrier 42 and to the ease of shipping such weights 50.

One skilled in the art will further realize that the concept of mounting a ballast assembly 40 as described above on the front axle of a conventional steering tractor will provide improved oscillation clearance, since the ballast assembly will be oscillating with the axle, and will also reduce loading on the conventional oscillation pins connecting the axle to the tractor chassis because the weight of the ballast package will be bearing directly on the front axle through its supporting structure, rather than through the oscillation pins.

Referring now to the alternative embodiment depicted in Figure 9, it can be seen that the ballast assembly 40 can be mounted on the chassis 11 of the tractor, as is more conventional, rather than mounting the ballast 40 on the front axle 15 as described above, and still provide a movable ballast 40 shiftable in response to the lateral movement of the front axle 15. In accordance with the principles of this alternative embodiment, the ballast 40 is supported from an arcuate track 75 affixed to the front of the tractor chassis 11. The ballast 40 is movably supported by rollers 77 affixed to an abbreviated carrier 78, which enable the ballast 40 to move along the track 75. The centre of curvature of said arcuate track 75 is preferably aligned with the pivot axis 12 so that the front axle 15 and the ballast 40 are moving about the same point.

Actuating means 80, such as the connecting links 82 and ball joints 83 depicted in Figure 9, must be operatively associated with the movable ballast 40, yet enable flexibility of movement of the front axle 15 for vertical oscillation and lateral shifting relative to the chassis 11. As the front axle 15 is shifted laterally in response to the steering movement of the steerable wheels 17, as described in detail above, the connecting links 82, which would preferably interconnect the ballast 40 to both opposing sides of the front axle 15, transfer the lateral movement of the front axle 15 relative to the chassis 11 to the movable ballast 40. As a result, the movable ballast 40 moves along the track 75 to effect a corresponding shifting of the ballast 40 relative to the chassis 11.

It will readily be appreciated that other means for actuating movement of the ballast along the track 75 could be provided, such as a linear actuator (not shown) interconnecting the ballast 40 and the chassis 11 which can be actuated in response to the movement of the front axle 15 or hydraulically tied to the hydraulic steering cylinders 19. One skilled in the art will further realize that the ballast assembly could be pivotally mounted to the front of the tractor and pivotally moved horizontally in response to a lateral shifting of the front axle, instead of mounting the ballast assembly on rollers supported by an arcuate track as defined above, to provide some measure of weight transfer with the movement of the axle.

## Claims

1. A tractor having :
- a chassis (11);
- a transverse rear axle connected to the chassis (11) and carrying a pair of laterally spaced ground engaging wheels;
- a transverse front axle (15) connected to the chassis (11) and having pivotally mounted thereon a pair of laterally spaced steerable wheels (17); said front axle (15) being positioned underneath a front portion of said chassis (11) and being pivotally connected to said chassis (11) for lateral movement relative thereto;
- steering means (19) operably connected to the steerable wheels (17) to control the pivotal movement of said steerable wheels (17) relative to said front axle (15); and
- control means (28) operably interconnecting said steerable wheels (17) and said chassis (11) to effect pivotal movement of said front axle (15) relative to said chassis (11) in response to a corresponding pivotal movement of said steerable wheels; and
the tractor being characterized in that :
- ballast means (40) are associated with a forward portion of the tractor to add weight to the steerable wheels (17); said ballast means (40) being centrally positioned between said steerable wheels (17); and
- the ballast means (40) moves laterally with the front axle (15) to maintain a generally central position between said steerable wheels (17) as said front axle (15) moves relative to said chassis (11).

2. A tractor according to claim 1 characterized in that the ballast means (40) is mounted for lateral movement relative to the chassis (11) in response to a corresponding lateral movement of the front axle (15).

3. A tractor according to claim 1 or 2 characterized in that the ballast means (40) is supported by a forward portion of the chassis (11) for lateral movement relative thereto.

4. A tractor according to claim 3 characterized in that said forward portion of the chassis (11) is provided with a transversely oriented track member (75) extending forwardly thereof; the ballast means (40) being supported on the track member (75) by rollers (77) to facilitate movement of said ballast means (40) along said track member (75).

5. A tractor according to any of the preceding claims characterized in that the ballast means (40) is operatively connected to the front axle (15) by a connecting linkage (80) transferring lateral motion of said front axle (15) to said ballast means (40).

6. A tractor according to claim 4 or 5, when appended to claim 4, characterized in that :
- the front axle (15) is pivotally connected to the chassis (11) for movement about a generally vertically extending pivot axis (12); and
- the track member (75) is arcuately shaped and has a centre of curvature substantially coinciding with said pivot axis (12).

7. A tractor according to any of the preceding claims characterized in that the ballast means (40) is mounted for movement in an opposite direction of the direction of movement of the chassis (11) relative to the front axle (15) in order to substantially maintain the general relative position of said ballast means (40) with respect to said front axle (15).

8. A tractor according to claims 1 or 2 characterized in that the ballast means (40) is detachably mounted on the front axle (15) to be pivotally movable therewith relative to the chassis (11).

9. A tractor according to claim 8 characterized in that the ballast means (40) are mounted on a rack member (42) affixed to the front axle (15) to position said ballast means (40) forwardly of the chassis (11); said rack member (42) being detachably connected to said front axle (15).

10. A tractor according to claim 8 or 9 characterized in that the ballast means (40) maintain a generally fixed position relative to the steerable wheels (17) as the front axle (15) and said ballast means (40) move laterally with respect to the chassis (11).

11. A tractor according to any of the preceding claims characterized in that the ballast means (40) includes a plurality of separable weights (50); said weights (50) being fastened together to form a unitary mass having an arcuate front face.

12. A tractor according to claim 11 characterized in that each weight (50) comprises a body member (50) including a forward portion (54) and a rearward portion (51); said rearward portion (51) having an opening (52) therethrough of a configuration corresponding to a carrier (42/ 78) upon which said weight (50) is to be mounted and said forward portion (54) having a cross-sectional thickness greater than a cross-sectional thickness of said rearward portion (51) whereby the cross-sectional thickness of said weight (50) decreases from said forward portion (54) to said rearward portion (51).

13. A tractor according to claim 12 characterized in that said body member (50) further comprises at least one fastener opening (57, 58), cooperable with fastener means (65, 68) for clamping adjacent weights together to form the ballast assembly (40).

14. A tractor according to any of the claims 12 or 13 characterized in that said body member (50) further includes an outwardly extending projection (59a) on one side thereof and a corresponding detent (59) on the opposing side thereof.

15. A tractor according to claim 14 characterized in that said body member (50) further includes a second outwardly extending projection (72) on said one side and a corresponding second detent (72) on said opposing side, said second projection (72) being symmetrically oriented with respect to said first projection (59a) about a line of symmetry.

16. A tractor according to any of the claims 12 to 15 characterized in that said body member (50) further includes a handle portion (55) including a handle opening (56) extending transversely therethrough.

17. A tractor according to claim 13 or any of the claims 14 to 16 when appended either directly or indirectly to claim 13 characterized in that said fastener means (68) includes a pair of threaded fasteners (68) inserted into the fastener openings (57, 58) from opposing sides of said ballast assembly (40); each fastener (68) of said pair of fasteners (68) being engaged with a corresponding fastener strip (65) and being operable to clamp together more than half of said individual weights (50).

18. A tractor according to any of the claims 12 to 17 characterized in that said opening (52) defines a clamping opening (53) in said rearward portion (51) of each individual weight (50) forming a transversely extending arcuate clamping passageway through said ballast assembly (40) for inserting a clamping strip (46) therein; said clamping strip (46) having a tapped hole therein for receiving a clamping bolt (47) interengaging said carrier (42/ 78) and said clamping strip (46) to detachably affix said ballast assembly (40) to said carrier (42/ 78).

19. A tractor according to any of the claims 12 to 18 characterized in that the centre of gravity of each individual weight (50) is positioned forwardly of the vertical physical centre of the body of the weight (50).

## Patentansprüche

1. Traktor mit:
- einem Fahrgestell (11),
- einer querverlaufenden Hinterachse, die mit dem Fahrgestell (11) verbunden ist und zwei mit seitlichem Abstand angeordnete Bodenräder trägt,
- einer quer angeordneten Vorderachse (15), die mit dem Fahrgestell (11) verbunden ist und auf der schwenkbar zwei mit seitlichem Abstand angeordnete lenkbare Räder (17) befestigt sind, wobei die Vorderachse (15) unterhalb eines vorderen Teils des Fahrgestells (11) angeordnet und schwenkbar mit dem Fahrgestell (11) für eine seitliche Bewegung relativ zu diesem verbunden ist,
- Lenkeinrichtungen (19), die betriebsmäßig mit den lenkbaren Rädern (17) verbunden sind, um die Schwenkbewegung der lenkbaren Räder (17) gegenüber der Vorderachse (15) zu steuern, und
- Steuereinrichtungen (28), die betriebsmäßig die lenkbaren Räder (17) und das Fahrgestell (11) miteinander verbinden, um eine Schwenkbewegung der Vorderachse (15) gegenüber dem Fahrgestell (11) in Abhängigkeit von einer entsprechenden Schwenkbewegung der lenkbaren Räder zu bewirken,
wobei der Traktor dadurch gekennzeichnet ist, daß
- Gegengewichtseinrichtungen (40) dem vorderen Teil des Traktors zugeordnet sind, um den lenkbaren Rädern (17) Gewicht hinzuzufügen, wobei die Gegengewichtseinrichtungen (40) in der Mitte zwischen den lenkbaren Rädern (17) angeordnet sind, und
- die Gegengewichtseinrichtung (40) sich seitlich mit der Vorderachse (15) bewegt, um eine allgemein in der Mitte liegende Position zwischen den lenkbaren Rädern (17) aufrechtzuerhalten, wenn sich die Vorderachse (15) gegenüber dem Fahrgestell bewegt.

2. Traktor nach Anspruch 1,
dadurch gekennzeichnet, daß die Gegengewichtseinrichtung (40) für eine seitliche Bewegung gegenüber dem Fahrgestell (11) in Abhängigkeit von einer entsprechenden seitlichen Bewegung der Vorderachse (15) befestigt ist.

3. Traktor nach Anspruch 1 oder 2,
dadurch gekennzeichnet, daß die Gegengewichtseinrichtung (40) von einem vorderen Teil des Fahrgestells (11) für eine seitliche Bewegung gegenüber diesem gehaltert ist.

4. Traktor nach Anspruch 3,
dadurch gekennzeichnet, daß der vordere Teil (11) mit einem in Querrichtung ausgerichteten Führungsbahnteil (75) versehen ist, das sich an der Vorderseite des Fahrgestells erstreckt, und daß die Gegengewichtseinrichtung (40) auf dem Führungsbahnteil (75) mit Hilfe von Rollen (77) gehaltert ist, um eine Bewegung der Gegengewichtseinrichtung (40) entlang des Führungsbahnteils (75) zu erleichtern.

5. Traktor nach einem der vorhergehenden Ansprüche,
dadurch gekennzeichnet, daß die Gegengewichtseinrichtung (40) betriebsmäßig mit der Vorderachse (15) über ein Verbindungsgestänge (80) verbunden ist, das die seitliche Bewegung der Vorderachse (15) auf die Gegengewichtseinrichtung (40) überträgt.

6. Traktor nach Anspruch 4 oder 5 unter Rückbeziehung auf Anspruch 4,
dadurch gekennzeichnet, daß:
- die Vorderachse (15) schwenkbar mit dem Fahrgestell (11) für eine Bewegung um eine sich allgemein vertikal erstreckende Schwenkachse (12) verbunden ist, und
- das Führungsbahnteil (75) bogenförmig geformt ist und einen Krümmungsmittelpunkt aufweist, der im wesentlichen mit der Schwenkachse (12) zusammenfällt.

7. Traktor nach einem der vorhergehenden Ansprüche,
dadurch gekennzeichnet, daß die Gegengewichtseinrichtung (40) für eine Bewegung in einer entgegengesetzten Richtung zur Richtung der Bewegung des Fahrgestells (11) gegenüber der Vorderachse (11) befestigt ist, um im wesentlichen die allgemeine relative Position der Gegengewichtseinrichtung (40) bezüglich der Vorderachse (15) aufrechtzuerhalten.

8. Traktor nach Anspruch 1 oder 2,
dadurch gekennzeichnet, daß die Gegengewichtseinrichtung (40) lösbar an der Vorderachse (15) derart befestigt ist, daß sie zusammen mit dieser schwenkbar gegenüber dem Fahrgestell (11) beweglich ist.

9. Traktor nach Anspruch 8,
dadurch gekennzeichnet, daß die Gegengewichtseinrichtungen (40) auf einem Gestellteil (42) befestigt sind, das an der Vorderachse (15) befestigt ist, um die Gegengewichtseinrichtungen (40) vor dem Fahrgestell (11) anzuordnen, wobei das Gestellteil (42) lösbar mit der Vorderachse (15) verbunden ist.

10. Traktor nach Ansoruch 8 oder 9,
dadurch gekennzeichnet, daß die Gegengewichtseinrichtungen (40) eine allgemein feste Position bezogen auf die lenkbaren Räder (17) beibehalten, wenn sich die Vorderachse (15) und die Gegengewichtseinrichtungen (40) seitlich gegenüber dem Fahrgestell (11) bewegen.

11. Traktor nach einem der vorhergehenden Ansprüche,
dadurch gekennzeichnet, daß die Gegengewichtseinrichtung (40) eine Vielzahl von voneinander trennbaren Gewichten (50) einschließt, und daß die Gewichte (50) aneinander befestigt sind, um eine einstückige Masse zu bilden, die eine bogenförmige Vorderfläche aufweist.

12. Traktor nach Anspruch 11, dadurch gekennzeichnet, daß jedes Gewicht (50) einen Körperteil (50) umfaßt, der einen vorderen Teil (54) und einen hinteren Teil (51) einschließt, wobei der hintere Teil (51) eine sich durch diesen hindurch erstreckende Öffnung (52) mit einer Form aufweist, die einem Träger (42/78) entspricht, auf dem das Gewicht (50) zu befestigen ist, und daß der vordere Teil (54) eine Querschnittsdicke aufweist, die größer als eine Querschnittsdicke des hinteren Teils (51) ist, so daß die Querschnittsdickee des Gewichtes (50) von dem vorderen Teil (54) zum hinteren Teil (51) abnimmt.

13. Traktor nach Anspruch 12,
dadurch gekennzeichnet, daß der Körperteil (50) weiterhin zumindestens eine Befestigungsmittelöffnung (57, 58) umfaßt, die mit Befestigungsmitteln (65, 68) zusammenwirken kann, um benachbarte Gewichte aneinander festzuklemmen, um die Gegengewichtsbaugruppe (40) zu bilden.

14. Traktor nach einem der Ansprüche 12 oder 13,
dadurch gekennzeichnet, daß der Körperteil (50) weiterhin einen sich nach außen erstreckenden Vorsprung (59a) auf seiner einen Seite und eine entsprechende Rastvertiefung (59) auf seiner gegenüberliegenden Seite einschließt.

15. Traktor nach Anspruch 14,
dadurch gekennzeichnet, daß der Körperteil (50) weiterhin einen zweiten sich nach außen erstreckenden Vorsprung (72) auf der einen Seite und eine entsprechende zweite Rastvertiefung (72) auf der entgegengesetzten Seite aufweist, wobei der zweite Vorsprung (52) bezüglich des ersten Vorsprunges (59a) um eine Symmetrielinie herum symmetrisch ausgerichtet ist.

16. Traktor nach einem der Ansprüche 12 - 15,
dadurch gekennzeichnet, daß der Körperteil (50) weiterhin einen Handgriffabschnitt (55) einschließt, der eine sich in Querrichtung durch diesen erstreckende Handgrifföffnung (56) einschließt.

17. Traktor nach Anspruch 13 oder einem der Ansprüche 14 -16 unter direkter oder indirekter Rückbeziehung auf Anspruch 13, dadurch gekennzeichnet, daß das Befestigungsmittel (68) zwei Gewindebefestigungsmittel (68) einschließt, die von entgegengesetzten Seiten der Gegengewichtsbaugruppe (40) in die Befestigungsmittelöffnungen (57, 58) eingesetzt sind, wobei jedes Befestigungsmittel des Paares von Befestigungsmitteln (68) mit einem entsprechenden Befestigungsstreifen (65) in Eingriff steht und betätigbar ist, um mehr als eine Hälfte der einzelnen Gewichte zusammenzuklemmen.

18. Traktor nach einem der Ansprüche 12 - 17,
dadurch gekennzeichnet, daß die Öffnung (52) eine Klemmöffnung (53) in dem hinteren Teil (51) jedes einzelnen Gewichtes (50) bildet, wodurch ein sich in Querrichtung erstreckender bogenförmiger Klemmkanal durch die Gegengewichts-Baugruppe (40) für das Einsetzen eines Klemmstreifens (56) in diesen Kanal gebildet wird, und daß der Klemmstreifen (46) eine darin ausgebildete Gewindebohrung zur Aufnahme einer Klemmschraube (47) aufweist, die in gegenseitigem Eingriff mit dem Träger (42/78) und dem Klemmstreifen (46) steht, um die Gegengewichts-Baugruppe (40) lösbar an dem Träger (42/78) zu befestigen.

19. Traktor nach einem der Ansprüche 12 bis 18,
dadurch gekennzeichnet, daß der Schwerpunkt jedes einzelnen Gewichtes (50) vor dem vertikalen geometrischen Mittelpunkt des Hauptteils des Gewichtes (50) angeordnet ist.

## Revendications

1. Tracteur comprenant:
- un châssis (11);
- un essieu transversal arrière relié au châssis (11) et portant une paire de roues espacées latéralement en contact avec le sol;
- un essieu transversal (15) avant relié au châssis (11) et possédant une paire de roues directrices espacées latéralement (17) qui lui sont montées à pivotement; ledit essieu avant (15) étant positionné sous une partie avant dudit châssis (11) et étant relié à pivotement audit châssis (11) pour assurer un mouvement latéral par rapport à lui;
- des moyens de direction (19) reliés fonctionnellement aux roues directrices (17) pour commander le mouvement de pivotement desdites roues directrices (17) par rapport audit essieu de direction (15); et
- des moyens de contrôle (28) reliant fonctionnellement lesdites roues directrices (17) et ledit châssis (11) pour réaliser le mouvement de pivotement dudit essieu avant (15) par rapport audit châssis (11) en réponse à un mouvement correspondant desdites roues directrices; et
le tracteur étant caractérisé en ce que:
- des moyens de lestage (40) sont associés à une partie avant du tracteur pour ajouter du poids sur les roues directrices (17); lesdits moyens de lestage (40) étant positionnés centralement entre lesdites roues directrices (17); et
- le moyen de lestage (40) se déplace latéralement avec l'essieu avant (15) pour maintenir une position généralement centrale entre lesdites roues directrices (17) lorsque ledit essieu avant (15) se déplace par rapport audit châssis (11).

2. Tracteur selon la revendication 1, caractérisé en ce que le moyen de lestage (40) est monté avec mouvement latéral possible par rapport au châssis (11) en réponse à un mouvement latéral correspondant de l'essieu avant (15).

3. Tracteur selon la revendication 1 ou 2, caractérisé en ce que le moyen de lestage (40) est soutenu par une partie avant du châssis (11) avec mouvement latéral possible par rapport à celui-ci.

4. Tracteur selon la revendication 3, caractérisé en ce que ladite partie avant du châssis (11) est pourvue d'un organe de guidage (75) disposé transversalement; le moyen de guidage (40) étant soutenu sur l'organe de guidage (75) par des galets (77) pour faciliter le mouvement dudit moyen de lestage (40) le long dudit organe de guidage (75).

5. Tracteur selon l'une quelconque des revendications précédentes, caractérisé en ce que le moyen de lestage (40) est relié fonctionnellement à l'essieu avant (15) par une liaison de raccordement (80) transférant un mouvement latéral dudit essieu frontal (15) audit moyen de lestage (40).

6. Tracteur selon la revendication 4 ou 5, lorsqu'elle se rattache à la revendication 4, caractérisé en ce que:
- l'essieu avant (15) est relié à pivotement au châssis (11) pour se mouvoir autour d'un axe-pivot (12) d'extension généralement verticale; et
- l'organe de guidage (75) est de forme arquée et possède un centre de courbure coïncidant substantiellement avec ledit axe-pivot (12).

7. Tracteur selon l'une quelconque des revendications précédentes, caractérisé en ce que le moyen de lestage (40) est monté pour se déplacer dans la direction opposée à la direction de mouvement du châssis (11) par rapport à l'essieu avant (15) de manière à maintenir substantiellement la position relative dudit moyen de lestage (40) par rapport audit essieu avant (15).

8. Tracteur selon la revendication 1 ou 2, caractérisé en ce que le moyen de lestage (40) est monté amoviblement sur l'essieu avant (15) de manière à être pivotable avec celui-ci par rapport au châssis (11).

9. Tracteur selon la revendication 8, caractérisé en ce que des moyens de lestage (40) sont montés sur un organe de support (42) fixé à l'essieu avant (15) pour positionner lesdits moyens de lestage (40) à l'avant du châssis (11); ledit organe de support (42) étant relié amoviblement audit essieu avant (15).

10. Tracteur selon la revendication 8 ou 9, caractérisé en ce que les moyens de lestage (40) demeurent dans une position généralement fixe par rapport aux roues directrices (17) lorsque l'essieu avant (15) et lesdits moyens de lestage (40) se déplacent latéralement par rapport au châssis (11).

11. Tracteur selon l'une quelconque des revendications précédentes, caractérisé en ce que les moyens de lestage (40) comprennent plusieurs poids séparables (50); lesdits poids (50) étant attachés ensemble pour constituer une masse unique possédant une face avant arquée.

12. Tracteur selon la revendication 11, caractérisé en ce que chaque poids (50) comprend un corps principal (50) comportant une portion avant (54) et une portion arrière (51); ladite portion arrière (51) possédant en son travers une ouverture (52) d'une configuration correspondant à un support (42/ 78) auquel ledit poids (50) est montable et ladite portion avant (54) possédant une épaisseur transversale plus importante que l'épaisseur transversale de ladite portion arrière (51), de telle manière que l'épaisseur transversale dudit poids (50) diminue en allant de ladite portion avant (54) vers ladite portion arrière (51).

13. Tracteur selon la revendication 12, caractérisé en ce que ledit corps principal (50) comprend en outre au moins une ouverture de fixation (57, 58), associable à des moyens de fixation (65, 68) pour serrer les poids adjacents entre eux pour constituer un ensemble de lestage (40).

14. Tracteur selon l'une quelconque des revendications 12 ou 13, caractérisé en ce que ledit corps principal (50) comprend en outre une protubérance (59a) sur l'une de ses faces et un positionneur correspondant (59) sur sa face opposée.

15. Tracteur selon la revendication 14, caractérisé en ce que ledit corps principal (50) comprend en outre une seconde protubérance (72) sur ladite une de ses faces et un second positionneur correspondant (72) sur ladite face opposée, ladite seconde protubérance (72) étant orientée symétriquement par rapport à ladite première protubérance (59a) selon un axe de symétrie.

16. Tracteur selon l'une quelconque des revendications 12 à 15, caractérisé en ce que ledit corps principal (50) comprend en outre une portion de poignée (55) comportant une ouverture de préhension (56) s'étendant transversalement en son travers.

17. Tracteur selon la revendication 13 ou l'une quelconque des revendications 14 à 16, lorsqu'elle se rattache soit directement, soit indirectement, à la revendication 13, caractérisé en ce que lesdits moyens de fixation (68) comprennent une paire d'éléments de fixation filetés (68) introduits dans les ouvertures de fixation (57, 58) à partir des faces opposées dudit ensemble de lestage (40); chaque élément de fixation (68) de ladite paire d'éléments de fixation (68) étant engagé avec une bande de fixation (65) correspondante et étant utilisable pour serrer ensemble plus de la moitié desdits poids individuels (50).

18. Tracteur selon l'une quelconque des revendications 12 à 17, caractérisé en ce que ladite ouverture (52) définit une ouverture de serrage (53) dans ladite portion arrière (51) de chaque poids individuel (50) constituant un passage de serrage arqué au travers dudit ensemble de lestage (40) pour y introduire une bande de serrage (46); ladite bande de serrage (46) possédant un trou fileté pour y recevoir un boulon de serrage (47) s'engageant dans ledit support (42/ 78) et ladite bande de serrage (46) pour fixer amoviblement ledit ensemble de lestage (40) audit support (42/ 78).

19. Tracteur selon l'une quelconque des revendications 12 à 18, caractérisé en ce que le centre de gravité de chaque poids individuel (50) est positionné à l'avant du centre physique vertical du corps du poids (50).
